# FASCICULE DE BREVET EUROPEEN

(11) **EP 0 853 032 B1**
(45) Date de publication et mention de la délivrance du brevet: **08.10.2003**
(21) Numéro de dépôt: 98400016.6
(22) Date de dépôt: 07.01.1998
(51) Int. Cl.: B62D 25/16

(54) **Pièce de carrosserie destinée à un véhicule automobile et son procédé de fabrication**
Karosserieteil für ein Kraftfahrzeug und Verfahren zu seiner Herstellung
Body part for a motor vehicle and procedure for its manufacturing

(30) Priorité: 08.01.1997 FR 9700122
(43) Date de publication de la demande: 15.07.1998
(73) Titulaire: HUTCHINSON, 75008 Paris (FR)
(72) Inventeur: Crand, Evelyne, 86100 Chatellerault (FR); Leblanc, Jean-Claude, 37300 Joue Les Tours (FR); Quenet, Bernard, 86490 Beaumont (FR)
(74) Mandataire: Jacquard, Philippe Jean-Luc

(56) Documents cités:
- EP-A- 0 839 704
- FR-A- 2 576 575
- PATENT ABSTRACTS OF JAPAN vol. 013, no. 320 (M-853), 20 juillet 1989 & JP 01 106779 A (SUZUKI MOTOR CO LTD), 24 avril 1989,

## Description

La présente invention a pour objet une pièce de carrosserie destinée à un véhicule automobile.

Le volume avant de la carrosserie des véhicules automobiles est couramment constitué des éléments suivants : capot, ailes gauche et droite, bouclier (pare-chocs), calandre et « spoiler ». Ces éléments sont aménagés d'ouvertures pour les projecteurs ainsi que pour les entrées d'air du moteur et ils supportent des accessoires tels que monogramme, enjoliveur, répétiteur, plaque de police, trappe d'accès, etc...

On connaît de la Demande de Brevet EP 839 704 publiée le 6 Mai 1998 une pièce de carrosserie constituant une pièce support pour des éléments de carrosserie externes traditionnels, et qui s'étend par exemple depuis la portière avant du véhicule jusqu'au bord intérieur des optiques de phare ou bien jusqu'au plan médian vertical longitudinal du véhicule.

L'objet de la présente invention est un nouveau concept d'élément de carrosserie externe sous la forme d'une aile d'automobile qui permet un nouveau découpage technique du volume avant et/ou arrière d'un véhicule.

L'idée de base de la présente invention est d'intégrer la fonction aile proprement dite et une partie de la fonction bouclier.

L'invention concerne ainsi une pièce de carrosserie destinée à un véhicule automobile caractérisée en ce qu'elle comporte une aile d'un seul tenant avec une région de bouclier qui forme, lorsque la pièce est montée sur le véhicule, une partie du bouclier, notamment une partie latérale de bouclier, ou un demi-bouclier, la pièce de carrosserie présentant une peau externe, dont le contour est le contour extérieur de l'aile et de la région de bouclier. Elle peut présenter une peau interne solidaire de la peau externe, et présentant de préférence des moyens de fixation de l'aile et du bouclier au reste de la carrosserie du véhicule.

Selon un mode de réalisation avantageux, la peau externe présente une ouverture pour au moins un élément de projecteur et la peau interne présente au moins un élément de fixation d'un dit élément de projecteur.

La peau interne peut être intégrée à la peau externe, ou bien encore rapportée sur celle-ci par des fixations ou par soudure.

La pièce peut avantageusement comporter au moins un absorbeur de chocs, qui, lorsque la pièce est montée sur le véhicule, vient en contact avec une traverse et/ou un longeron du véhicule.

La pièce peut comporter un élément de renfort longeant l'aile sur au moins une majeure partie de sa longueur, au dessus d'une région de passage de roue.

L'absorbeur de chocs et/ou l'élément de renfort peuvent être en mousse injectée, notamment par moulage in situ sur la pièce, avant son montage sur le véhicule.

L'aile peut comporter une glace de protection d'un élément de projecteur, cette glace de protection étant en matière plastique et étant intégrée à l'aile par surmoulage.

Selon un mode de réalisation préféré, la peau externe et la peau interne de la pièce de carrosserie, solidaires l'une de l'autre, forment avantageusement un caisson de renforcement, notamment dans la région de bouclier.

L'invention concerne également un procédé de fabrication d'une aile telle que définie ci-dessus.

D'autres caractéristiques et avantages de l'invention apparaitront mieux à la lecture de la description qui va suivre, donnée à titre d'exemple non limitatif, en liaison avec les dessins ci-annexés, dans lesquels :
- la figure 1 représente un véhicule équipé de deux ailes avant selon la présente invention ;
- la figure 2 représente une vue de dessus du véhicule selon la figure 1, avec coupe partielle par un plan horizontal passant par les axes de rotation des roues du véhicule ;
- la figure 3 illustre un mode de réalisation de montage d'une aile selon l'invention sur un véhicule ;
- les figures 4a à 4c illustrent un premier mode de réalisation d'une variante préférée de l'invention, à savoir un véhicule vu en perspective avant (4a), une vue de dessus avec une coupe horizontale partielle d'une pièce selon l'invention (4b), une coupe verticale AA (4c) et un détail (4d) d'une version modifiée de la figure 4c
- et les figures 5a et 5b illustrent un deuxième mode de réalisation de la variante préférée de l'invention, respectivement sous la forme d'une perspective avant et d'une vue de dessus avec coupe horizontale partielle par un plan passant par l'axe des roues du véhicule.

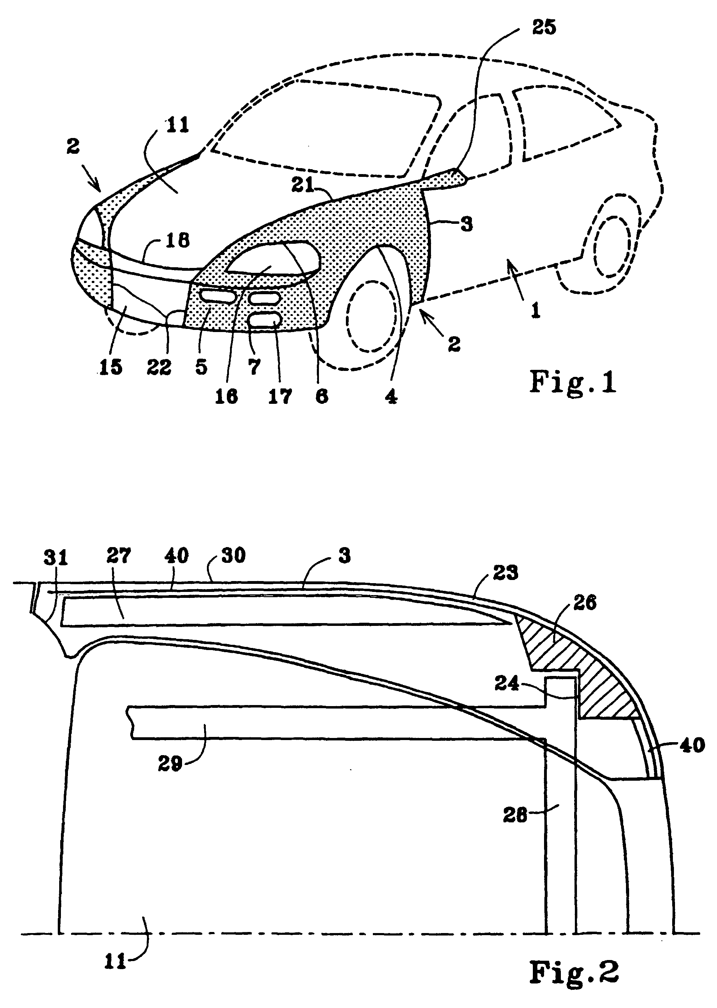

Un véhicule, désigné par le repère général 1, comporte, comme représenté aux figures 1 et 2, deux pièces avant 2 selon l'invention, dont chacune intègre en une seule pièce la partie latérale 3 pourvue d'un passage de roue 4, et la partie avant 5 formant une partie latérale de bouclier pare-chocs. Dans le mode de réalisation représenté, le bouclier est en trois parties, à savoir deux parties latérales 5 d'un seul tenant avec les ailes respectives 3, qui jouxtent par leurs bords 22 une région centrale 15 montée sur la carrosserie. A titre de variante, les bords 22 des deux parties latérales 5 peuvent se rejoindre, ce qui permet de supprimer la région centrale 15 du bouclier.

Les ailes 3 longent le capot le long d'une ligne de jonction 21 et le bouclier 15 le long d'une ligne de jonction 22. L'aile peut présenter une ouverture 6 pour un phare 16 et/ou une ouverture 7 pour un feu de position et/ou clignotant 17, et/ou une région 23 en décrochement, surplombant la région de bouclier 5.

Un absorbeur de chocs 26, par exemple en mousse polyuréthane, ayant une face 24 en appui sur la traverse avant 28 du véhicule et/ou une face en appui sur un longeron avant 29, permet d'améliorer la tenue aux chocs de la pièce 2 qui est en général constituée d'une peau externe 30 en matière plastique ou en métal et éventuellement d'une peau interne 40 en matière plastique ou en métal.

L'aile 3 intègre éventuellement le carrossage d'accessoires tels qu'un rétroviseur 25, une partie du « spoiler », l'élargisseur de roue, le pare-boue, et comme indiqué ci-dessus, l'absorbeur de chocs 26.

Un élément de renfort 27, par exemple en mousse de polyuréthane, peut longer une majeure partie ou la totalité de la longueur de l'aile 3, et permet de rigidifier celle-ci.

La pièce 2 peut comporter une peau interne 40 qui peut servir de support interne assurant la fixation de l'aile 3 et du bouclier 5 au reste de la carrosserie et portant éventuellement le projecteur 16.

La peau externe 30 peut être réalisée en métal, par exemple en acier ou en aluminium, ou bien en matière plastique, par exemple en matériau thermoplastique, en polyester de type SMC ou RTM, ou bien encore en polyurée, en polyuréthane, en polyester insaturé, ou en dicyclopentadiène.

Une technique particulièrement intéressante est celle dite « RIM » mettant en oeuvre un moulage avec une réaction chimique dans le moule, et notamment la technique dite « SRIM » avec apport préalable d'un tissu de verre de renfort.

La technique « RIM » permet un moulage ultérieur de préférence dans le même moule de l'absorbeur de choc 26 et/ou de l'élément de renfort 27. A cet effet, au moins une partie du moule est remplacée par un poinçon permettant l'injection de mousse polyuréthane.

Après prise en masse de la mousse, celle-ci reste solidaire de la peau externe 30.

La présence d'une peau interne 40, par exemple collée ou soudée à la peau externe 30 et qui double celle-ci, permet en particulier de former un caisson renforçant la rigidité de la pièce 2, notamment au niveau de la partie de bouclier 5. La présence de cette peau interne 40 peut permettre de se dispenser de l'absorbeur de chocs 26 et/ou de l'élément de renfort 27.

La peau interne 40 peut être en matière plastique par exemple en polyester de type SMC ou RTM, et elle peut être réalisée selon la technologie « RIM » précitée. La peau interne 40 peut être également en métal, par exemple en acier ou en aluminium.

L'invention s'applique à tous les véhicules automobiles (tourisme, utilitaires, sport, tout terrain...) et elle peut également s'appliquer aux pièces de carrosserie arrière.

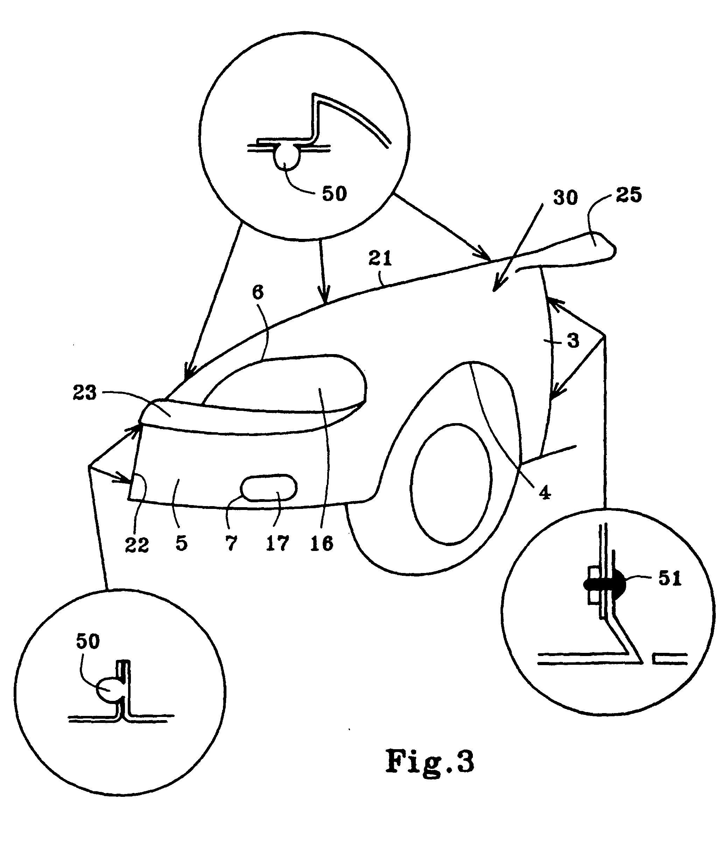

L'invention permet de constituer un ensemble pré-assemblé pour montage en chaîne. Il peut être fixé sur la carrosserie du véhicule par exemple par des agrafes 50 ou des rivets 51, les points d'agrafage ou de rivetage étant représentés à titre d'exemple à la figure 3.

L'invention permet de supprimer l'accostage entre le capot et le projecteur si celui-ci est logé dans une ouverture fermée 6. Il peut être également prévu d'intégrer à l'aile 2 la glace de protection du projecteur 16 par surmoulage d'une glace plastique dans le coutour de l'ouverture 6, de préférence dans le moule ayant servi au moulage de la peau externe 30.

Elle permet également de supprimer la ligne de découpage entre les ailes et le pare-chocs, qui est générateur de défauts d'accostage.

Elle offre également de nouvelles possibilités aux stylistes du fait de la suppression du découpage technique entre les ailes et le pare-chocs.

De par sa conception, elle est particulièrement adaptée à la mise en oeuvre de matériaux plastiques avec intégration des fonctions (ailes et avant de caisse).

Elle permet enfin une adaptation aux exigences réduites de tenue aux chocs latéraux prévus au cahier des charges normalisés dans la construction automobile.

Selon une variante préférée, la pièce de carrosserie selon l'invention présente une peau interne disposée de manière à ménager sous la face supérieure 32 de l'aile 3 un espace 45 entre la peau interne 40 et la peau externe 30 pour recevoir au moins un accessoire, par exemple un réservoir d'eau pour lave-glace et/ou un vase d'expansion pour le radiateur.

Ce concept permet également d'élargir la face supérieure 32 des ailes 3, c'est-à-dire que la pièce 2 peut intégrer une partie de la surface d'habitude dévolue au capot 11 tout en récupérant un volume utile sous la surface supérieure 32. Il en résulte un découpage technique avec un capot plus étroit et plus élancé.

La peau interne 40 peut constituer en particulier un support assurant la fixation de la pièce 2 au reste de la carrosserie.

Elle peut porter les projecteurs 16 du véhicule.

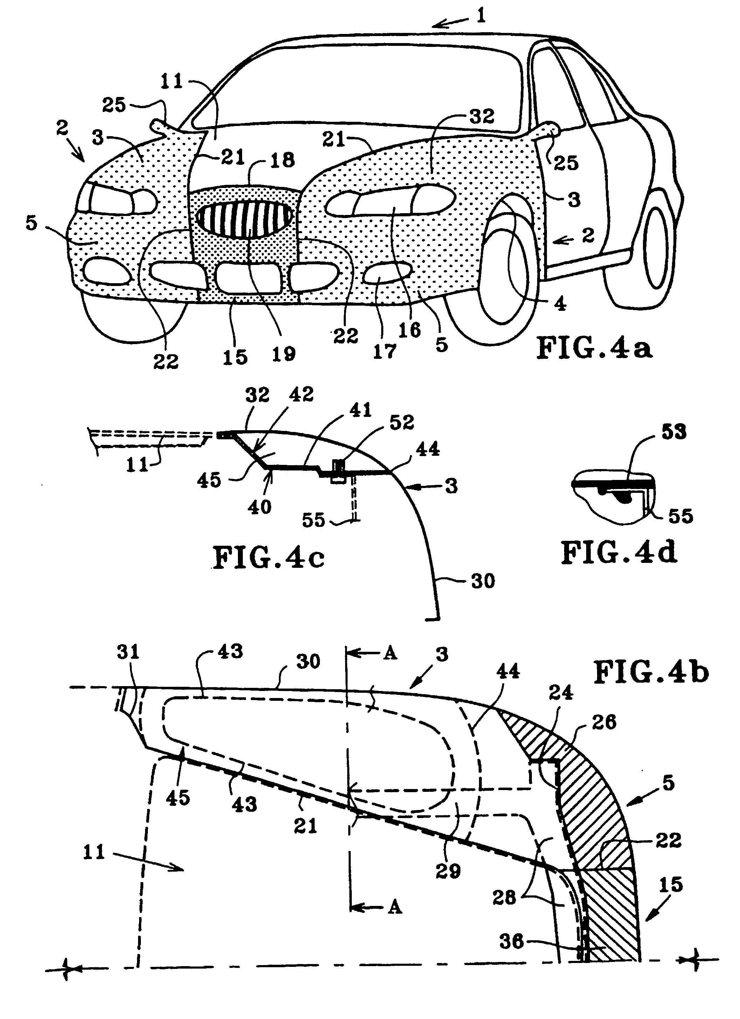

Conformément aux figures 4a et 4b, la partie avant du véhicule 1 comporte deux pièces monobloc 2 dont chacune intègre une aile 3 et un bouclier 5 qui vient par son bord 22 en contact bord à bord avec une pièce 15 formant une région centrale de bouclier. Cette pièce 15 est par exemple une pièce monobloc intégrant la calandre 19 et venant en contact avec le capot 11 par son bord supérieur 11.

Comme le montrent plus particulièrement les figures 4b et 4c, la peau interne 40 est, en dessous de la face supérieure 32 de l'aile 3, espacée de la peau interne 30 de manière à définir un espace 45 ouvert latéralement et permettant de recevoir un accessoire tel qu'un réservoir de liquide lave-glace 43.

Comme le montre la figure 4c, la peau interne présente par exemple une région sensiblement plane et horizontale 41 pourvue d'un moyen de fixation (vis 52 à la figure 4c ou rivets 53 à la figure 4d) et qui rejoint la peau 30 le long d'une ligne de raccordement 44. En direction du capot, la peau 40 se. raccorde à la peau 30 au voisinage de la ligne 21, grâce à une région de raccordement inclinée 42. Le réservoir de liquide 43 est ainsi disposé à la partie supérieure de l'aile 3, sous sa face supérieure 32, dans un espace 45 ouvert latéralement vers l'intérieur du véhicule où il est bien protégé des chocs, en raison de la rigidité de l'espace 45 et aussi du fait que les chocs se produisent en effet à un niveau situé généralement plus bas.

La peau interne 40 peut bien entendu doubler la peau 30 ailleurs qu'autour de l'espace 45.

On remarquera à la figure 4b que l'absorbeur de chocs latéral 26 se prolonge en s'appuyant sur la traverse avant 28 jusqu'à la ligne de jonction 22 avec la pièce centrale 15, laquelle est également pourvue d'un absorbeur de chocs 36 qui peut être en un même matériau que l'absorbeur de chocs 26.

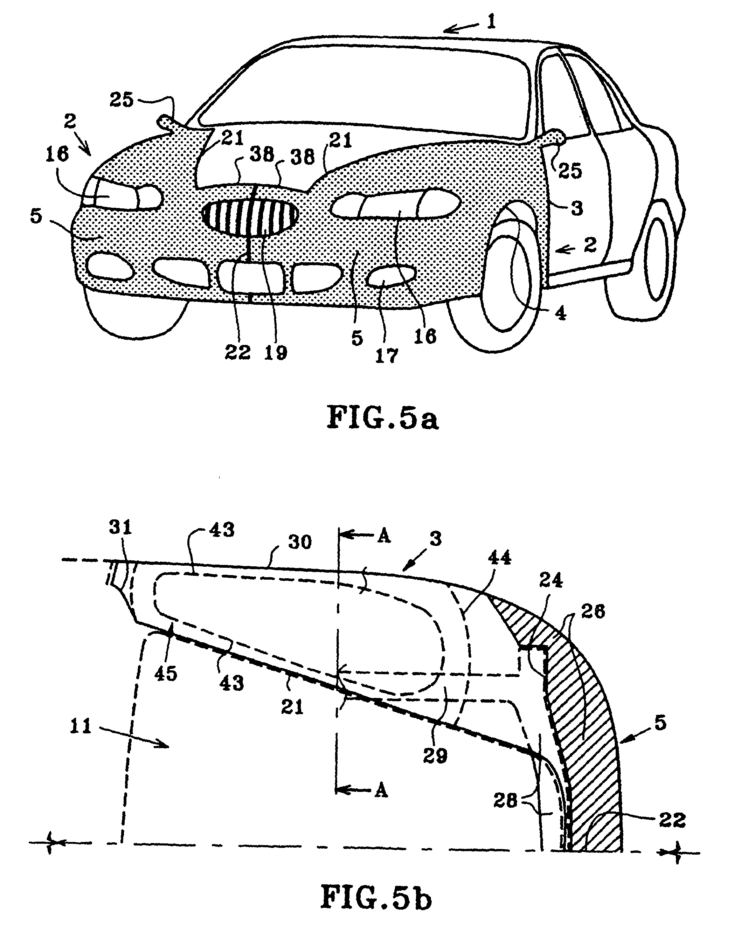

La partie avant représentée aux figures 5a et 5b comporte deux pièces 2 qui se rejoignent le long de la ligne de jonction 22 située dans l'axe de caisse XX du véhicule 1, c'est-à-dire que l'avant du véhicule ne comporte plus de pièce 15 formant bouclier central.

Dans l'exemple représenté, chacune des pièces 2, gauche et droite, présente une réserve pour la moitié de la calandre 19 et une ligne de jonction supérieure 38 avec le capot 11, en plus de la ligne de jonction 21.

L'absorbeur de chocs 26 s'étend en s'appuyant sur la traverse avant 28 jusqu'à la ligne de jonction 22 située dans l'axe de caisse XX'.

Les pièces de carrosserie 2 représentées aux figures 4a à 4d, et 5a à 5b peuvent être fabriquées avec le même procédé que la pièce selon les figures 1 à 3, notamment par moulage. Elles permettent de constituer un ensemble rigide pré-assemblé pour montage en chaîne, ceci en raison de l'intégration de la peau interne, ensemble qui supprime le découpage aile/pare-chocs, générateur de défauts d'accostage. Elles permettent également de supprimer l'accostage capot-projecteur si ce dernier est intégré dans une ouverture fermée.

Elles permettent également de supprimer le découpage calandre/pare-chocs, générateur de défauts d'accostage. Elles permettent de satisfaire aux exigences de tenue aux chocs réduites, chocs latéraux normalisés dans la construction automobile.

Elles permettent également de réaliser une face avant en deux ou trois parties, et comprenant les ailes gauche et droite, le bouclier, et partiellement le capot.

Elle offrent de nouvelles possibilités aux stylistes du fait de la suppression des découpages aile/pare-chocs et calandre, ainsi qu'une conception adaptée à la mise en oeuvre de matériaux plastisques avec intégration des fonctions (ailes et face avant de caisse), ainsi qu'une diminution du poids du capot.

L'intégration d'un ou plusieurs réservoirs d'eau et/ou d'autres accessoires dans l'une et/ou l'autre des pièces 2, à l'avant et/ou à l'arrière du véhicule, permet un gain de place ainsi qu'une augmentation de la rigidité.

## Revendications

1. Pièce de carrosserie destinée à un véhicule automobile **caractérisée en ce qu'**elle comporte une aile (3) qui est d'un seul tenant avec une région de bouclier (5) qui forme, lorsque la pièce de carrosserie (2) est montée sur le véhicule, une partie du bouclier, et **en ce qu'**elle comporte une peau externe (30) dont le contour définit le contour externe de ladite pièce (2), y compris la région de bouclier (5).

2. Pièce de carrosserie selon la revendication 1, **caractérisée en ce qu'**elle comporte une peau interne (40) solidaire de la peau externe (30) et présentant préférentiellement des moyens (50) de fixation de la pièce au reste de la carrosserie du véhicule.

3. Pièce de carrosserie selon la revendication 2, **caractérisée en ce que** la peau externe (30) comporte une ouverture (6) pour au moins un élément de projecteur (16) et **en ce que** la peau interne (40) comporte au moins un élément de fixation d'un dit élément de projecteur (16).

4. Pièce de carrosserie selon une des revendications 2 ou 3 **caractérisée en ce que** la peau externe (30) est réalisée en matière plastique ou en métal et **en ce que** la peau interne (40) est réalisée en matière plastique ou en métal.

5. Pièce de carrosserie selon une des revendications 2 à 4 **caractérisée en ce que** la peau interne (40) est intégrée à la peau externe (30) ou est rapportée sur celle-ci par des fixations ou par soudure.

6. Pièce de carrosserie selon une des revendications 2 à 5 **caractérisée en ce que** la peau interne (40) est disposée de manière à ménager sous la face supérieure (32) de l'aile (3) un espace (45) entre la peau interne (40) et la peau externe (30), pour recevoir au moins un accessoire (43) tel qu'un réservoir d'eau ou un vase d'expansion.

7. Pièce de carrosserie selon une des revendications précédentes **caractérisée en ce qu'**elle comporte un absorbeur de chocs (26), qui, lorsque la pièce (2) est montée sur le véhicule, vient en contact avec une traverse (28) et/ou un longeron (29) du véhicule.

8. Pièce de carrosserie selon une des revendications précédentes **caractérisée en ce qu'**elle comporte un élément de renfort (27) longeant l'aile (3) sur au moins une majeure partie de sa longueur, au dessus d'une région (4) de passage de roue.

9. Pièce de carrosserie selon une des revendications 7 ou 8 **caractérisée en ce que** l'absorbeur de chocs (26) et/ou l'élément de renfort (27) est en mousse injectée, notamment par moulage in situ sur la pièce (2), avant son montage sur le véhicule (1).

10. Pièce de carrosserie selon une des revendications précédentes **caractérisée en ce qu'**elle comporte une glace de protection d'un élément de projecteur (16), cette glace de protection étant en matière plastique et étant intégrée à l'aile (2) par surmoulage.

11. Pièce de carrosserie selon une des revendications précédentes **caractérisée en ce que** la peau externe (30) et la peau interne (40) forment un caisson de renforcement, notamment dans la région de bouclier (5).

12. Pièce de carrosserie selon une des revendications précédentes **caractérisée en ce que** ladite partie de bouclier constitue une partie latérale du bouclier raccordable à une pièce (15) formant une partie centrale du bouclier.

13. Pièce de carrosserie selon une des revendications 1 à 11 **caractérisée en ce que** ladite partie de bouclier constitue une moitié de bouclier raccordable à une partie de bouclier symétrique d'une pièce (2) symétrique intégrant l'aile opposée (3) et l'autre moitié de bouclier (5).

14. Procédé de fabrication d'une aile selon une des revendications précédentes **caractérisé en ce qu'**il met en oeuvre une étape de moulage d'une peau externe (30) ayant le contour extérieur de l'aile (3), et de la région de bouclier (5).

15. Procédé de fabrication selon la revendication 14 **caractérisé en ce qu'**il met en oeuvre une étape de moulage in situ, d'un dit absorbeur de choc (26) et/ou d'un dit élément de renfort (27), de préférence dans un moule ayant servi au moulage de la peau externe (30).

16. Procédé de fabrication selon la revendication 15 **caractérisé en ce qu'**il met en oeuvre une dite glace de protection surmoulée dans le moule ayant servi au moulage de la peau externe (30).

## Patentansprüche

1. Karosserieteil für ein Kraftfahrzeug, **dadurch gekennzeichnet, daß** es einen Kotflügel (3) aufweist, der einstückig mit einem Stoßfängerbereich (5) ist, welcher einen Teil des Stoßfängers darstellt, wenn das Karosserieteil (2) am Fahrzeug montiert ist, sowie dadurch, daß es eine Außenschicht (30) aufweist, deren Kontur die äußere Kontur des Teils (2) einschließlich des Stoßfängerbereichs (5) begrenzt.

2. Karosserieteil nach Anspruch 1, **dadurch gekennzeichnet, daß** es eine Innenschicht (40) aufweist, welche fest mit der Außenschicht (30) verbunden ist und bevorzugt Mittel (50) zum Befestigen des Teils an der übrigen Karosserie des Fahrzeugs aufweist.

3. Karosserieteil nach Anspruch 2, **dadurch gekennzeichnet, daß** die Außenschicht (30) eine Öffnung (6) für mindestens ein Scheinwerferelement (16) aufweist, und daß die Innenschicht (40) mindestens ein Element zum Befestigen eines solchen Scheinwerferelementes (16) aufweist.

4. Karosserieteil nach einem der Ansprüche 2 oder 3, **dadurch gekennzeichnet, daß** die Außenschicht (30) aus Plastikmaterial oder Metall gefertigt ist, und daß die Innenschicht (40) aus Plastikmaterial oder Metall gefertigt ist.

5. Karosserieteil nach einem der Ansprüche 2 bis 4, **dadurch gekennzeichnet, daß** die Innenschicht (40) mit der Außenschicht (30) integriert bzw. durch Befestigungselemente oder Schweißen auf dieser angebracht ist.

6. Karosserieteil nach einem der Ansprüche 2 bis 5, **dadurch gekennzeichnet, daß** die Innenschicht (40) derart angeordnet ist, daß sie unter der Oberfläche (32) des Kotflügels (3) einen Hohlraum (45) zwischen der Innenschicht (40) und der Außenschicht (30) zum Aufnehmen mindestens eines Zubehörteils (43) wie etwa eines Wasservorratsbehälters oder eines Ausgleichsbehälters zur Verfügung stellt.

7. Karosserieteil nach einem der vorhergehenden Ansprüche, **dadurch gekennzeichnet, daß** es einen Stoßabsorber (26) aufweist, der an einem Querträger (28) und/oder einem Längsträger (29) des Fahrzeugs anliegt, wenn das Teil (2) am Fahrzeug montiert ist.

8. Karosserieteil nach einem der vorhergehenden Ansprüche, **dadurch gekennzeichnet, daß** es ein Verstärkungselement (27) aufweist, welches sich über einem Radlaufbereich (4) entlang des Kotflügels (3) über mindestens einen Großteil der Länge des letzteren erstreckt.

9. Karosserieteil nach einem der Ansprüche 7 oder 8, **dadurch gekennzeichnet, daß** der Stoßabsorber (26) und/oder das Verstärkungselement (27) aus einem spritzgegossenen Schaumstoff besteht, der insbesondere vor dem Montieren des Teils (2) am Fahrzeug (1) vor Ort an dieses Teil angeformt wurde.

10. Karosserieteil nach einem der vorhergehenden Ansprüche, **dadurch gekennzeichnet, daß** es ein Schutzglas für ein Scheinwerferelement (16) aufweist, wobei das Schutzglas aus Plastikmaterial besteht und durch Aufformen mit dem Kotflügel (2) integriert ist.

11. Karosserieteil nach einem der vorhergehenden Ansprüche, **dadurch gekennzeichnet, daß** die Außenschicht (30) und die Innenschicht (40) einen Versteifungskasten bilden, und zwar insbesondere im Stoßfängerbereich (5).

12. Karosserieteil nach einem der vorhergehenden Ansprüche, **dadurch gekennzeichnet, daß** der Stoßfängerabschnitt einen Seitenabschnitt des Stoßfängers darstellt, welcher mit einem Teil (15) verbindbar ist, das einen Mittelabschnitt des Stoßfängers bildet.

13. Karosserieteil nach einem der Ansprüche 1 bis 11, **dadurch gekennzeichnet, daß** der Stoßfängerabschnitt eine Stoßfängerhälfte bildet, welche mit einem dazu symmetrischen Stoßfängerabschnitt eines symmetrischen Teils (2) verbindbar ist, welches den gegenüberliegenden Kotflügel (3) sowie die weitere Stoßfängerhälfte (5) umfaßt.

14. Verfahren zur Herstellung eines Kotflügels nach einem der vorhergehenden Ansprüche, **dadurch gekennzeichnet, daß** es einen Schritt des Formens einer Außenschicht (30) anwendet, welche die äußere Kontur des Kotflügels (3) und des Stoßfängerbereichs (5) aufweist.

15. Herstellungsverfahren nach Anspruch 14, **dadurch gekennzeichnet, daß** es einen Schritt des Formens vor Ort eines solchen Stoßabsorbers (26) und/oder eines solchen Verstärkungselementes (27) anwendet, bevorzugt in einem Formwerkzeug, welches bereits zum Formen der Außenschicht (30) diente.

16. Herstellungsverfahren nach Anspruch 15, **dadurch gekennzeichnet, daß** es ein solches Schutzglas verwendet, das in dem Formwerkzeug aufgeformt wurde, welches bereits zum Formen der Außenschicht (30) diente.

## Claims

1. Body part intended for a motor vehicle, **characterised in that** it comprises a wing (3), constituting a single piece with a guard region (5) which forms a guard part when the body part (2) is mounted on the vehicle, and **in that** it has an outer skin (30), the contour of which defines the external contour of said part (2), including the guard region (5).

2. Body part as claimed in claim 1, **characterised in that** it has an inner skin (40) joined to the outer skin (30), preferably having means (50) for fixing the part to the rest of the bodywork of the vehicle.

3. Body part as claimed in claim 2, **characterised in that** the outer skin (30) has an aperture (6) for at least one projector element (16) and **in that** the inner skin (40) has at least one element for fixing said projector element (16).

4. Body part as claimed in one of claims 2 or 3, **characterised in that** the outer skin (30) is made from a plastics material or metal and the inner skin (40) is made from a plastics material or metal.

5. Body part as claimed in one of claims 2 to 4, **characterised in that** the inner skin (40) is integrated with the outer skin (30) or is joined to the latter by fixing means or by welding.

6. Body part as claimed in one of claims 2 to 5, **characterised in that** the inner skin (40) is disposed so that a space (45) is left between the inner skin (40) and the outer skin (30) behind the top face (32) of the wing (3) for receiving at least one accessory (43) such as a water tank or an expansion tank.

7. Body part as claimed in one of the preceding claims, **characterised in that** it has a shock absorber (26) which is in contact with a cross-piece (28) and/or a member (29) when the part (2) is mounted on the vehicle.

8. Body part as claimed in one of the preceding claims, **characterised in that** it has a reinforcing element (27) running alongside the wing (3), across at least a major part of its length, above a region (4) providing a space for a wheel.

9. Body part as claimed in one of claims 7 or 8, **characterised in that** the shock absorber (26) and/or the reinforcing element (27) is made from injected foam, in particular is made by moulding on the part (2) in situ, before it is mounted on the vehicle (1).

10. Body part as claimed in one of the preceding claims **characterised in that** it has a protective pane for a projector element (16), this protective pane being made from a plastics material and being integrated in the wing (2) by moulding.

11. Body part as claimed in one of the preceding claims, **characterised in that** the outer skin (30) and the inner skin (40) form a box-type reinforcing structure, in particular in the guard region (5).

12. Body part as claimed in one of the preceding claims, **characterised in that** said guard part constitutes a side part of the guard and can be joined to a part (15) forming a central part of the guard.

13. Body part as claimed in one of claims 1 to 11, **characterised in that** said guard part constitutes a guard half which can be joined to a symmetrical guard part of a symmetrical part (2) integrating the opposite wing (3) and the other guard half (5).

14. Method of producing a wing as claimed in one of the preceding claims, **characterised in that** it incorporates a step whereby an outer skin (30), having the external contour of the wing (3), and the guard region (5) are moulded.

15. Production method as claimed in claim 14, **characterised in that** it incorporates a step whereby said shock absorber (25) and/or said reinforcing element (27) are moulded in situ, preferably in a mould that was used for moulding the outer skin (30).

16. Production method as claimed in claim 15, **characterised in that** it incorporates said protective pane which is moulded on in the mould that was used for moulding the outer skin (30).
